# EUROPEAN PATENT APPLICATION

(11) **EP 0 770 565 A1**
(43) Date of publication of application: **02.05.1997**
(21) Application number: 96202961.7
(22) Date of filing: 23.10.1996
(51) Int. Cl.: B65G 1/04

(54) **Cellular depot with high-efficiency conveyor cars**

(30) Priority: 27.10.1995 IT MI952226
(71) Applicant: FATA AUTOMATION S.p.A., I-10152 Torino (IT)
(72) Inventor: Deandrea, Giorgio, 10098 Rivoli (Torino) (IT)
(74) Representative: Faraggiana, Vittorio, Dr. Ing.

(57) **Abstract**

A cellular depot (10) comprises a plurality of cells (11) facing onto a corridor (12) through which runs at least one motor-driven car (15) to convey loads between the cells. The car (15) comprises a trolley (16) which is motor-driven to move between the car and the inside of a cell and transfer a load stored or to be stored to and from the car and cell. The trolley (16) comprises an electric power battery (33) which supplies power to the motor drive of the trolley. When the trolley is completely accommodated on the car the battery (33) is connected for recharging, by means of an automatic electric coupling (34), to a source of power (32) reaching the car (15).

## Description

This invention refers to a cellular depot comprising innovative cars or transelevators for moving loads, for example containers, to and from the cells.

There are known depots composed of a reticulated structure forming a plurality of cells disposed side by side in rows on several floors. The cells face, with aperture for inserting and removing, onto a corridor along which the conveyor cars run.

As a rule, the cars run along rails parallel to the rows of cells and carry telescopic forks or movable platforms which are motor-driven to enter the cells and withdraw or deposit the load.

In the case of very large loads, such as for example containers, motor vehicle bodies, tube nests, etc., the forks or platforms have to carry out a very long stroke to insert themselves completely into the cells.

As the stroke increases, the problems deriving from clearances, elasticity and overall dimensions of the telescopic parts increase until such solutions rapidly become technically and economically disadvantageous.

The Italian patent application no. 20348 A/81 describes a cellular depot in which transelevators or cars comprise guides which couple with guides provided in each cell to enable a motor-driven transfer trolley to run between the transelevator and the cell. In the solution described in the aforesaid patent, the main car provides the source of power for the transfer trolley, the latter comprising actuators both to enable it to run out from the main car, and to enable it to lift and deposit the load. This solution has the disadvantage of requiring complex movable electrical connections, such as rigid conductors with sliding shoes, cables with winding drum, flexible track elements, etc.. Such connections are sources of problems and intense maintenance due to the large number of handling cycles that the trolleys carry out. In addition, they often call for excessively large volumes of space.

The transelevator, in turn, has a general power supply usually achieved by means of contacts sliding on contact lines disposed along the rails in the corridor between the cells. Batteries have also been proposed to supply power to the trolleys but proved to he rather unpractical due to the periodical stoppages of the system that are required for recharging.

The general scope of this invention is to obviate the aforementioned problems by providing a cellular depot system in which the cars comprise transfer trolleys devoid of movable power supply connections and which permit intensive continuous use of the system.

This scope is achieved, according to the invention, by providing a cellular depot comprising a plurality of cells facing onto a corridor along which runs at least one motor-driven car to transport loads between the cells, the car comprising a trolley which is motor-driven to move between the car and the inside of a cell and transfer a load stored or to be stored to and from the car and cell, characterized by the fact that the trolley comprises an electric power battery which supplies power to the motor drive of the trolley, when the trolley is completely accommodated on the car the battery being connected for recharging, by means of an automatic electric coupling, to a source of power reaching the car.

The innovative principles of this invention and its advantages with respect to the known technique will be more clearly evident from the following description of a possible exemplificative embodiment applying such principles, with reference to the accompanying drawings, in which:
- figure 1 shows a schematic perspective sectional view or a depot made according to the invention;
- figure 2 shows a schematic enlarged partial cross-sectional front view of a car of the depot of figure 1;
- figure 3 shows a view along the line III-III of figure 2.

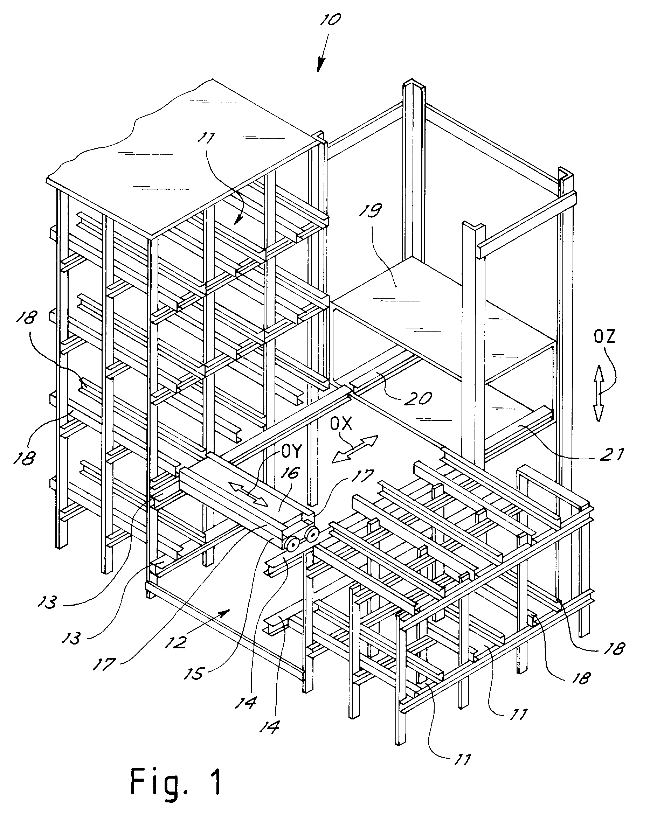

With reference to the figures, figure 1 shows a partial view of an automated depot (generically indicated by reference 10), made according to the invention. The depot 10 comprises a reticulated structure, composed of a series of horizontal and vertical beams to create a plurality of cells 11 facing onto a central corridor 12.

Disposed on each floor of cells on either side of the corridor are rails 13, 14 along which run motor-driven cars 15, only one of which is shown for simplicity in the drawing. The car running along the respective pair of rails in the direction indicated by OX can come to rest in line with each cell on the floor. As will be explained further on, the car 15 is provided superiorly with a trolley 16 which can move crosswise to the movement of the car (that is to say in the direction OY) to enter a cell in front of the car. The trolley runs on rails 17 mounted on the car and on complementary rails 18 inside the cell.

Disposed at the end of the corridor (on just one or both sides thereof) are elevators 19, which move vertically in the direction OZ to transfer the cars from one floor to another. For this purpose, each elevator is internally provided with a pair of rails 20, 21 extending the rails 13, 14.

With the structure described above, a car can move between the cells facing onto the corridor until it comes face to face with a pre-established cell in which to insert its trolley to withdraw or deposit a load.

Up to this point a substantially known technique has been described.

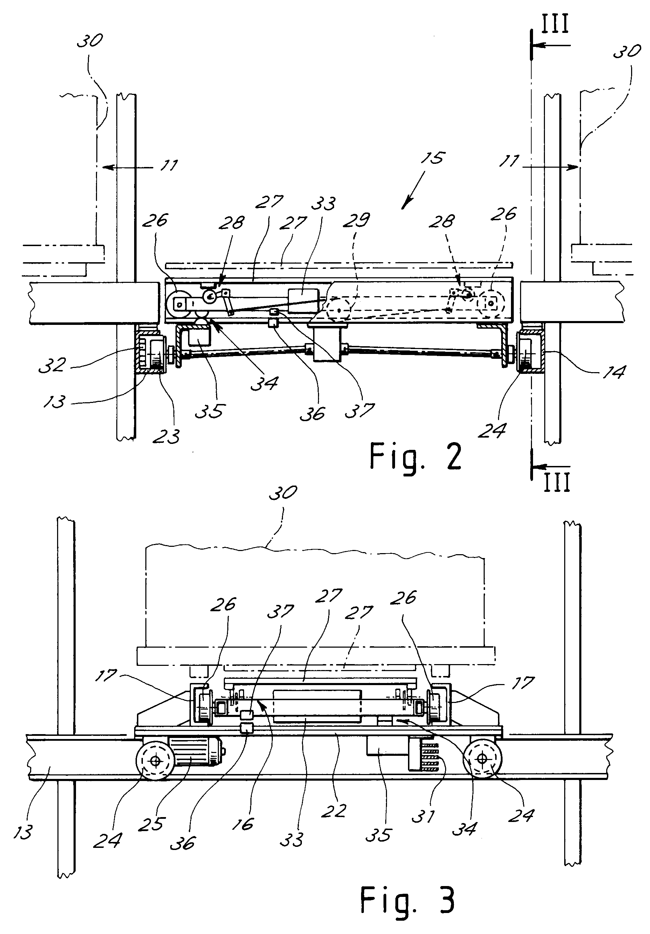

Figures 2 and 3 show, in greater detail, a car 15 (in figure 2 seen from the direction OX). The car 15 comprises a frame 22 bearing wheels 23, 24 to run along the rails 13, 14 and 20, 21. At least one pair of wheels is motor-driven by means of an electric motor 25.

The frame 22 supports the pair of rails 17 along which, by means of motor-driven wheels 26, runs the trolley 16. The trolley 16 is provided superiorly with a loading platform 27 which can move vertically (as shown by the broken line) by means of a connecting rod and crank hoisting gear 28, operated by an actuator 29.

The vertical movement of the platform makes it possible to lift and deposit a load 30 onto the car 15, as can be clearly seen in figure 3, and into the cell, as can be clearly seen in figure 2.

The car 15 obtains the electric power for its movement along the corridor by collecting it, through sliding brushes or contacts 31 of known technique, which slide over contact lines 32 disposed along a rail 13 or 14.

According to the innovative principles of this invention, the trolley 16 is provided with batteries 33 to supply power to the motor-driven wheels and the kinematic mechanism for raising and lowering the platform. Provided between the trolley and car is an automatic electric coupling 34 (for example with sliding contacts), which connects the batteries on the trolley to a battery charger 35 on the car when the trolley is in the re-entered position on the car. The battery charger is in turn powered by means of the sliding contacts 31 which supply power to the car.

When in use, during the period that the trolley is in position on the car (for example during the transfer of the car from one cell to another), the batteries are being recharged, since the coupling 34 is connected. When the car is positioned in front of a cell to be served, the trolley moves towards the cell and the loading platform rises and lowers using the power stored in the batteries, without any electric power connection with the car, the coupling 34 disconnecting itself automatically upon movement of the trolley.

Mechanical connections can obviously be provided if necessary between the car and the trolley (for example for the limit stop) as well as electric signal connections.

The latter, being low-powered and consequently requiring relatively thin conductors, do not suffer from the problems that there would be in the case of power supply conductors.

Advantageously, known cordless communication systems can be used for the trolley 16 such as optical communication systems, which are well-known to the experts in the field.

It is thus possible to avoid all electrical connections between car and trolley, at least when the trolley is extended outside the car.

Figures 2 and 3 schematically show, by references 36 and 37, known optical transreceiving devices disposed on the car and trolley, respectively.

The trolley can also comprise detectors (optical or mechanical) of projections inside the cells, to identify for example the position for withdrawing and unloading the load.

The batteries can be relatively low-powered, and consequently of limited dimensions, their periods of use being very short in proportion to their recharging periods. Consequently, it is not necessary to carry out any recharging operations other than that which occurs during the movement of the car.

At this point it will be clear how the intended scopes have been achieved, by providing a cellular depot, in which electric power supply connections have been eliminated between the transport car and the inserting and extracting trolley, while ensuring the continuous use of the system.

The foregoing description of an embodiment applying the innovative principles of this invention is obviously given by way of example in order to illustrate such innovative principles and should not therefore be understood as a limitation to the sphere of the invention claimed herein.

For example, the general structure of the depot and the cars can be varied according to practical requirements.

Moreover, it is obvious that the battery charger can be disposed either on the car or on the trolley, without distinction.

If considered preferable, the contact lines for supplying power to the car and for recharging the batteries can be separate.

## Claims

1. Cellular depot (10) comprising a plurality of cells (11) facing onto a corridor (12) through which runs at least one motor-driven car (15) to convey loads between the cells. The car (15) comprises a trolley (16) which is motor-driven to move between the car and the inside of a cell and transfer a load stored or to be stored to and from the car and cell, characterized by the fact that the trolley (16) comprises an electric power battery (33) which supplies power to the motor drive of the trolley, when the trolley is completely accommodated on the car the battery (33) being connected for recharging, by means of an automatic electric coupling (34), to a source of power (32) reaching the car (15).

2. Depot as claimed in claim 1, characterized by the fact that the source of energy reaching the car is the power supply of the car.

3. Depot as claimed in claim 1, characterized by the fact that the source of energy reaches the car through contact lines (32) disposed along rail on which the car runs along the corridor.

4. Depot as claimed in claim 1, characterized by the fact that the trolley comprises a platform (27) for raising and lowering the load, which is made to move by electric actuators (29) powered by said battery.

5. Depot as claimed in claim 1, characterized by the fact that the source of energy comprises a battery charging device (35) on the car.

6. Depot as claimed in claim 1, characterized by the fact that cordless communication devices (36, 37) for exchange of controls and information are disposed between the car and the trolley.

7. Depot as claimed in claim 6, characterized by the fact that the cordless communication devices comprise optical communication devices.
